# EUROPEAN PATENT APPLICATION

(11) **EP 2 921 951 A1**
(43) Date of publication of application: **23.09.2015**
(21) Application number: 14191388.9
(22) Date of filing: 31.10.2014
(51) Int. Cl.: G06F 3/14, G09G 5/14

(54) **Electronic device and display method**

(30) Priority: 18.03.2014 JP 2014055579
(71) Applicant: Kabushiki Kaisha Toshiba, Tokyo 105-8001 (JP)
(72) Inventor: Kizaki, Shigeru, Tokyo, 198-0024 (JP); Hachiya, Koji, Tokyo, 198-0024 (JP)
(74) Representative: Henkel, Breuer & Partner

(57) **Abstract**

According to one embodiment, an electronic device includes a display controller (303). The display controller performs a process for displaying, on a second display, a first image obtained by scaling to a resolution of the second display a first window which is selected from at least one window being displayed on a first display and/or the second display.

## Description

Embodiments described herein relate generally to a technology that makes a plurality of display units display their respective images.

In recent years, electronic device to which a plurality of display units can be connected, such as personal computers, has become widespread. A notebook computer, for instance, can display images using not only a built-in liquid crystal display but also an external display or a projector connected to the computer. Furthermore, it is also possible to make a built-in display and an external display simultaneously display the same single image (a clone display mode) or to make the built-in display and the external display simultaneously display different respective images (an extended desktop mode).

A method of effectively using a plurality of displays is desired.
FIG. 1 is an exemplary view illustrating the external appearance of an item of electronic device in the embodiment and that of a second display.
FIG. 2 is an exemplary block diagram illustrating a system structure of the item of electronic device in the embodiment.
FIG. 3 is an exemplary block diagram illustrating the structure of a display control utility program.
FIG. 4 is an exemplary view illustrating images displayed on the LCD and the external display before the control utility program is activated.
FIG. 5 is an exemplary view illustrating data stored in a VRAM, a frame buffer of the LCD and a frame buffer of the external display.
FIG. 6 is an exemplary view illustrating images displayed on the LCD and the external display after the control utility program is activated.
FIG. 7 is an exemplary view illustrating images displayed on the LCD and the external display after the control utility program is activated.
FIG. 8 is an enlarged view illustrating exemplary icons.
FIG. 9 is an exemplary view illustrating data stored in the VRAM, the frame buffer of the LCD and the frame buffer of the external display.
FIG. 10 is an exemplary view illustrating data stored in the VRAM, the frame buffer of the LCD and the frame buffer of the external display.
FIG. 11 is an exemplary view illustrating images displayed on the LCD and those on the external display.
FIG. 12 is an exemplary view illustrating images displayed on the LCD and those on the external display.
FIG. 13 is a view exemplarily illustrating images displayed on the LCD and those on the external display.
FIG. 14 is an exemplary view illustrating data stored in the VRAM, the frame buffer of the LCD and the frame buffer of the external display.
FIG. 15 is an exemplary view illustrating images displayed on the LCD and those on the external display.
FIG. 16 is an exemplary view illustrating images displayed on the LCD and those on the external display.
FIG. 17 is an exemplary flow chart illustrating procedural steps executed by a user interface display processing module.
FIG. 18 is an exemplary view illustrating images displayed on the LCD and those on the external display.
FIG. 19 is an exemplary view illustrating images displayed on the LCD and those on the external display.

Various embodiments will be described hereinafter with reference to the accompanying drawings.

In general, according to one embodiment, an electronic device includes a display controller. The display controller performs a process for displaying, on a second display, a first image obtained by scaling to a resolution of the second display a first window which is selected from at least one window being displayed on a first display and/or the second display.

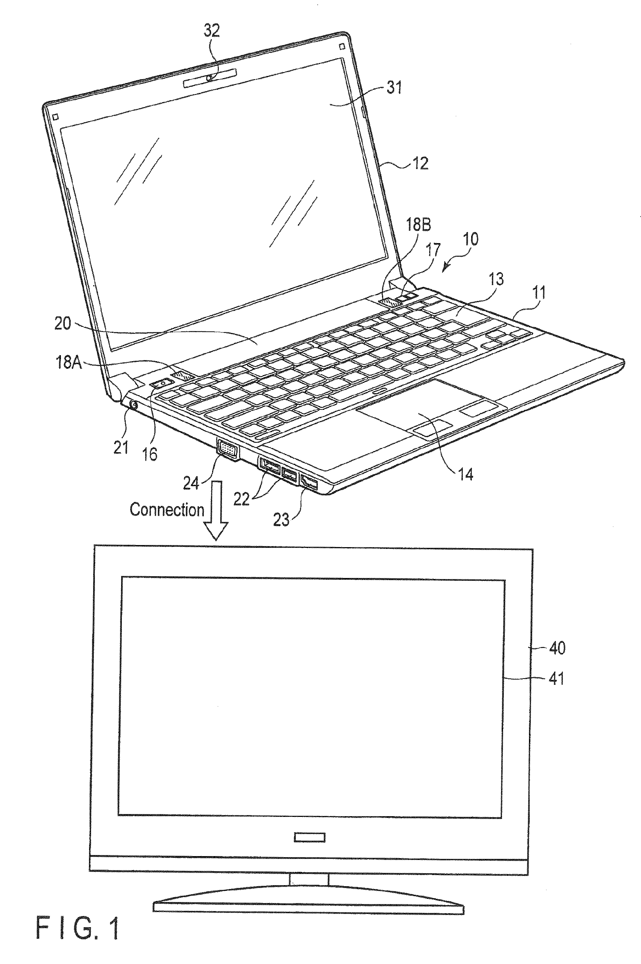

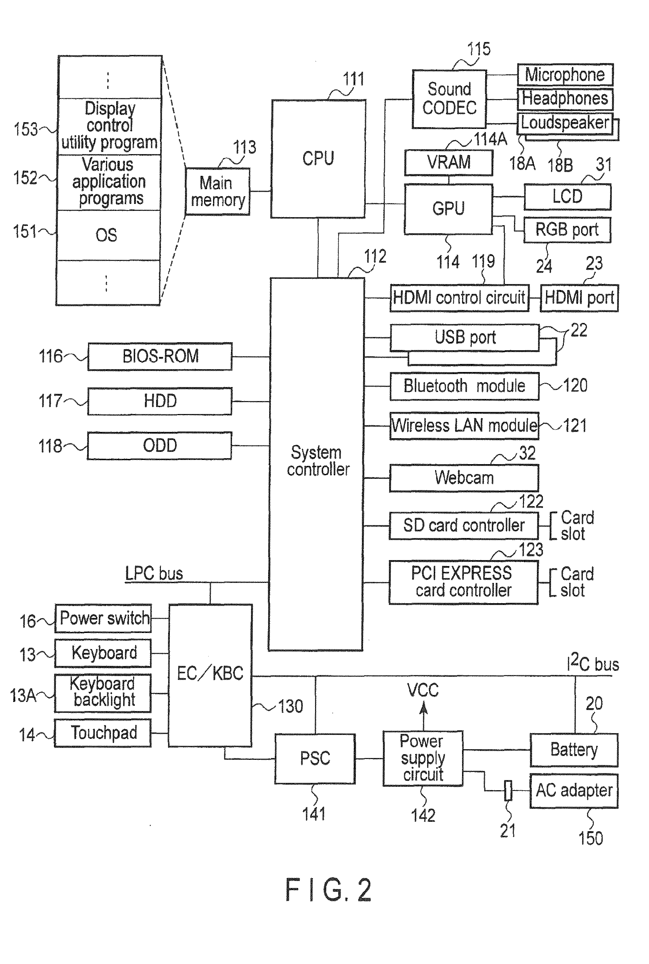

First of all, electronic device in the embodiment will be structurally explained below with reference to FIG. 1 and FIG. 2. It is possible to embody the electronic device in a notebook computer, for instance.

FIG. 1 is a perspective front view of a notebook computer 10, which is in a state of its display unit being open. The computer 10 is so constructed as to receive electricity from a battery 20. The computer 10 has a computer body 11 and a display unit 12. A display such as a liquid crystal display (LCD) 31 is built in the display unit 12. Furthermore, a camera (a webcam) 32 is provided on the upper end portion of the display unit 12.

The display unit 12 is attached to the computer body 11 in such a manner that it can freely swing between an open position, in which the top surface of the computer body 11 exposes, and a closed position, in which the top surface of the computer body 11 is covered with the display unit 12. The computer body 11 has a case of a thin box shape, on the top surface of which there are arranged a keyboard 13, a touchpad 14, a power switch 16 for turning the computer 10 on or off, some functional buttons 17, and loudspeakers 18A, 18B.

Furthermore, there is provided a power connector 21 at the computer body 11. The power connector 21 is provided at a side of the computer body 11. For instance, it is provided at the left side surface of the computer body 11. An external power supply is removably connected to the power connector 21. An AC adapter may be used as the external power supply. The AC adapter is a power supply that converts commercially available power (AC power) to DC power.

The battery 20 is removably fitted into the rear end portion of the computer body 11, for instance. It does not matter if the battery 20 is a type of a battery that is embedded in the computer 10.

The computer 10 is driven by the power from the external power supply or the power from the battery 20. When the external power supply is connected to the power connector 21 of the computer 10, the computer 10 is driven by the power from the external power supply. The power from the external power supply is also used to charge the battery 20. While the external power supply is not connected to the power connector 21 of the computer 10, the computer 10 is driven by the power from the battery 20.

Furthermore, there are provided at the computer body 11 some USB ports 22, a High-Definition Multimedia Interface (HDMI [registered trademark]) output port 23, and an RGB port 24. An external display 40 is connected through the HDMI output port 23 or the RGB port 24 to the computer 10 by means of a cable not illustrated in any drawings. A display such as a liquid crystal display (LCD) 31 is built into the external display 40.

FIG. 2 illustrates the system structure of the computer 10. The computer 10 comprises a CPU 111, a system controller 112, a main memory 113, a graphics processing unit (GPU) 114, a sound codec 115, a BIOS-ROM 116, a hard disk drive (HDD) 117, an optical disc drive (ODD) 118, a Bluetooth (registered trademark) module 120, a wireless LAN module 121, an SD card controller 122, a PCI EXPRESS card controller 123, an embedded controller/keyboard controller IC (EC/KBC) 130, a keyboard backlight 13A, a power supply controller (PSC) 141, a power supply circuit 142, and so forth.

The CPU 111 is a processer for controlling the operation of every component of the computer 10. The CPU 111 executes various items of software loaded from the HDD 117, or a storage unit, to the main memory 113. The software includes an operating system (OS) 151, various application programs 152, and a display control utility program 153.

The CPU 111 also runs a Basic Input/Output System (BIOS) stored in the BIOS-ROM 116, which is a nonvolatile memory. The BIOS is a system program for executing hardware control.

The GPU 114 is a display controller for controlling the LCD 31 used as a display monitor of the computer 10. The GPU 114 generates a display signal (an LVDS signal), which should be supplied to the LCD 31, from the display data stored in a video memory (VRAM) 114A. Furthermore, the GPU 114 can also generate from the display data analog RGB signals and an HDMI video signal. The analog RGB signals are supplied through the USB ports 22 to an external display. An HDMI output port 23 can output the HDMI video signal (an uncompressed digital video signal) and the digital audio signal to the external display with the help of a single cable. An HDMI control circuit 119 is an interface for outputting the HDMI video signal and the digital audio signal to the external display with the help of the HDMI output port 23.

The system controller 112 is a bridge device for connecting the CPU 111 to each of the components. The system controller 112 internally has a serial ATA controller for controlling a hard disk drive (HDD) 117 and an optical disc drive (ODD) 118. The system controller 112 communicates with each device on a Low Pin Count (LPC) bus.

The EC/KBC 130 is connected to the LPC bus. The EC/KBC 130, the power supply controller (PSC) 141 and the battery 20 are connected to one another through a serial bus such as an I²C bus.

The EC/KBC 130 is a power management controller for executing power management of the computer 10, and is, for instance, embodied as a one chip microcomputer internally having a keyboard controller for controlling the keyboard (KB) 13 and the touchpad 14. The EC/KBC 130 has a function of causing the computer 10 to be turned on or off according to the user's operation of the power switch 16. The control for causing the computer 10 to be turned on or off will be achieved by the cooperation between the EC/KBC 130 and the power supply controller (PSC) 141. The power supply controller (PSC) 141 begins to control the power supply circuit 142 and to turn the computer 10 on upon receiving an ON signal supplied from the EC/KBC 130. The power supply controller (PSC) 141 begins to control the power supply circuit 142 and to turn the computer 10 off upon receiving an OFF signal supplied from the EC/KBC 130. The EC/KBC 130, power supply controller (PSC) 141, and the power supply circuit 142 will keep operating, even if the computer 10 is powered off, using the electric power supplied from the battery 20 or the AC adapter 150.

The EC/KBC 130 furthermore can turn on or off a keyboard backlight 13A disposed behind the keyboard 13. The EC/KBC 130 is connected to a panel on-off switch 131 which is configured to find whether the display unit 12 is open or closed. The EC/KBC 130 can power on the computer 10 even after the panel on-off switch 131 has found that the display unit 12 is opened.

The power supply circuit 142 generates operating power, electric power to be supplied to each component, by using electric power from the battery 20 or from the AC adapter 150, which is connected to the computer body 11 as an external power source.

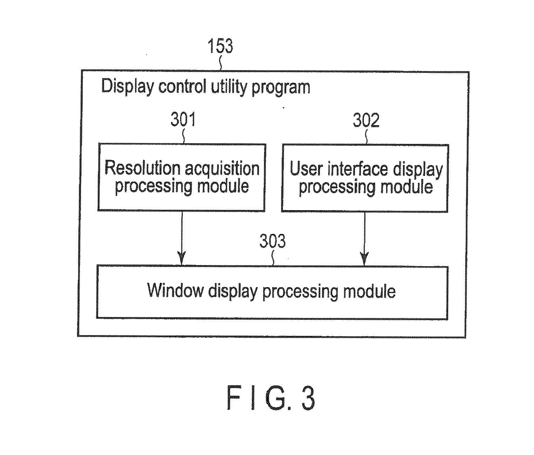

FIG. 3 is a block diagram illustrating a structure of a display control utility program 153. As illustrated in FIG. 3, the display control utility program 153 comprises a resolution acquisition processing module 301, a user interface display processing module 302, and a window display processing module 303.

The display control utility program 153 is a program effective in an extended desktop mode. Let us suppose that the LCD 31 is a primary display, and that a secondary display (a second display) is connected to the computer 10.

The resolution acquisition processing module 301 acquires from the operating system 151 the resolution of the secondary display.

After the display control utility program 153 has started, the user interface display processing module 302 executes a process of making the LCD 31 display a user interface that includes thumbnails of the windows being displayed on the LCD 31.

The window display processing module 303 performs the process for causing the external display 40 to display a first image obtained by scaling to the resolution of the external display 40 a first window selected from at least one window being displayed on the LCD (the first display) 31 and/or the external display (the second display) 40.

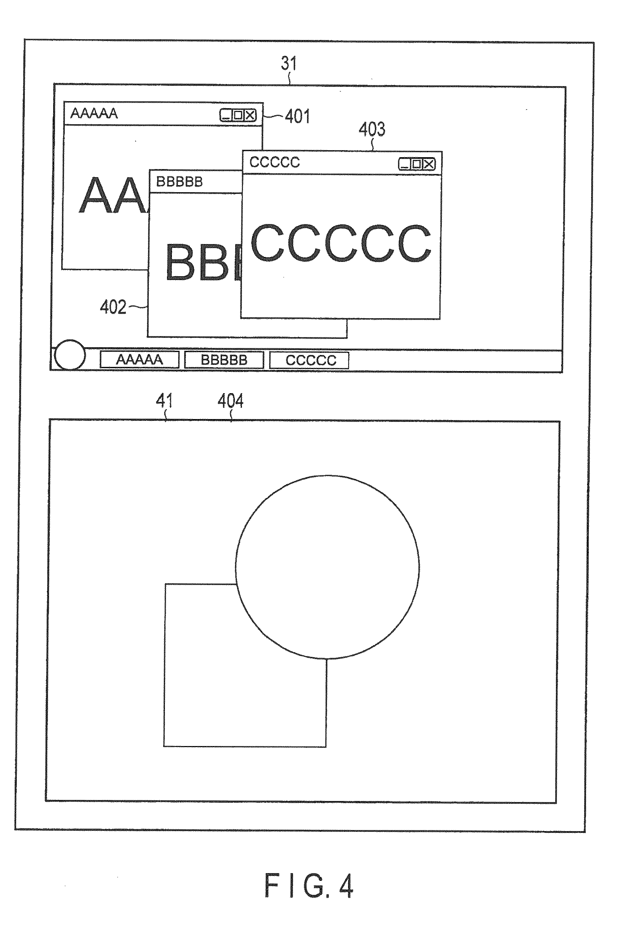

For instance, a window 401, a window 402 and a window 403 are displayed on the LCD 31 (the first display) as illustrated in FIG. 4 before the display control utility program 153 starts up. The external display 40, which is connected to the HDMI output port 23 or the RGB port 24, allows its LCD (the second meaning expressive device) 41 to display a desktop screen 404.

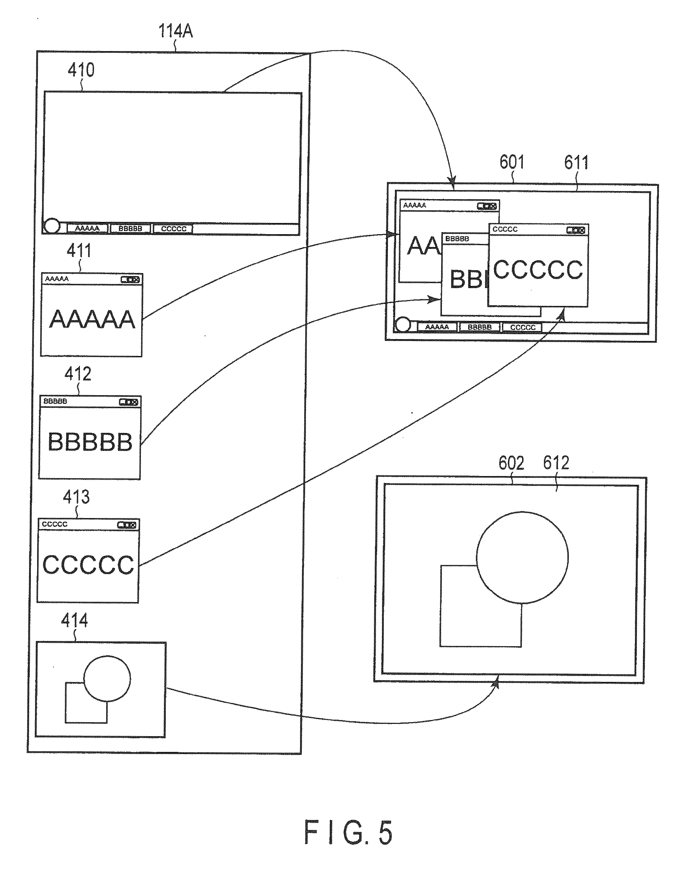

At this moment, a VRAM 114A stores as illustrated in FIG. 5 rendering data 410 for the desktop screen of the LCD 31, rendering data 411 for the window 401, rendering data 412 for the window 402, and rendering data 413 for the window 403, and rendering data 414 for the desktop screen 404 of the LCD 41. The operating system 151 synthesizes rendering data 410, rendering data 411, rendering data 412 and rendering data 413, and generates rendering data 611 within the frame buffer 601 that is secured for the LCD 31 and is located in the VRAM 114A or the main memory 113. The operating system 151 generates, based on the rendering data 414, rendering data 612A within the frame buffer 602 that is secured for the external display 40 and is located in the VRAM 114A or the main memory 113.

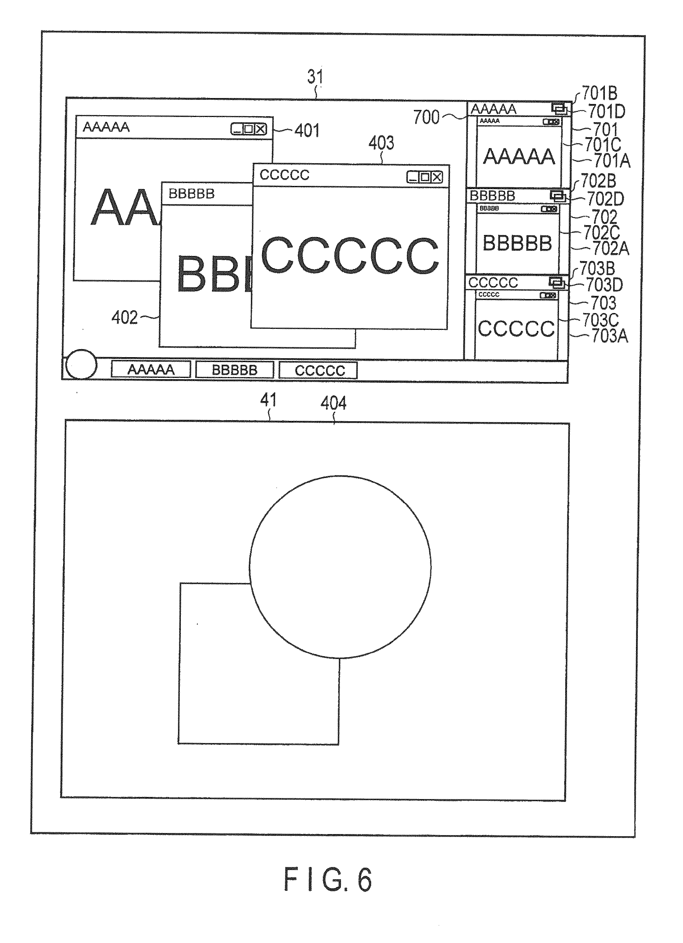

After the display control utility program 153 has started, the user interface display processing module 302 executes a process of making the LCD 31 display an operating window 700, as illustrated in FIG. 6. The operating window 700 has an operating palette 701, an operating palette 702 and an operating palette 703 respectively corresponding to the window 401, the window 402 and the window 403. Operating palette 701 has a thumbnail region 701A, where a thumbnail image 701C of the window 401 is displayed, and a toolbar region 701B, where an icon 701D is displayed. Operating palette 702 has a thumbnail region 702A, where a thumbnail image 702C of the window 402 is displayed, and a toolbar region 702B, where an icon 702D is displayed. Operating palette 703 has a thumbnail region 703A, where a thumbnail image 703C of the window 403 is displayed, and a toolbar region 703B, where an icon 703D is displayed.

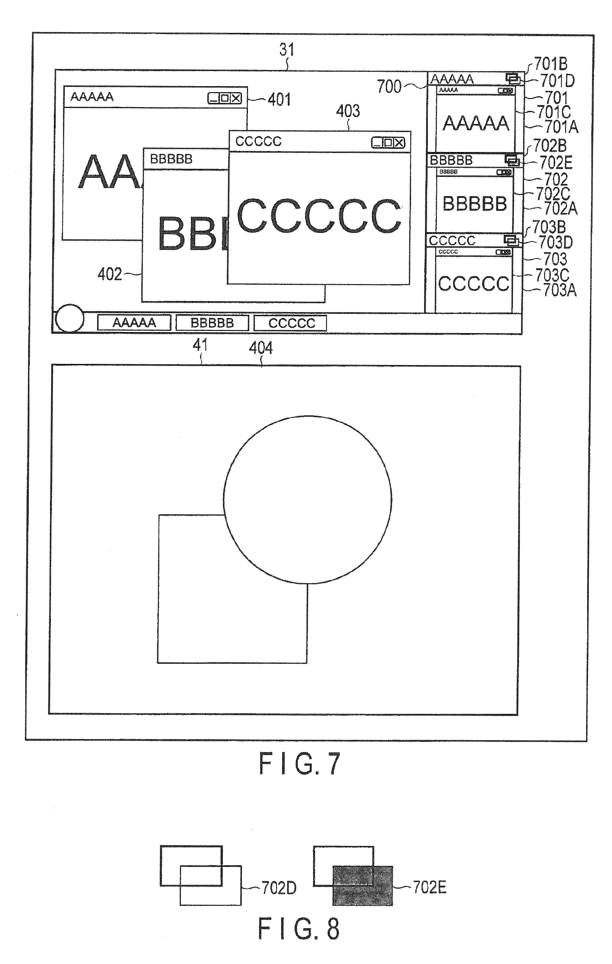

For instance, when a user swipes on the touchpad 14 to move a cursor onto icon 702D and then clicks, the user interface display processing module 302 changes icon 702D into an icon 207E, as illustrated in FIG. 7. FIG. 8 is a view expansively illustrating icon 702D and icon 702E.

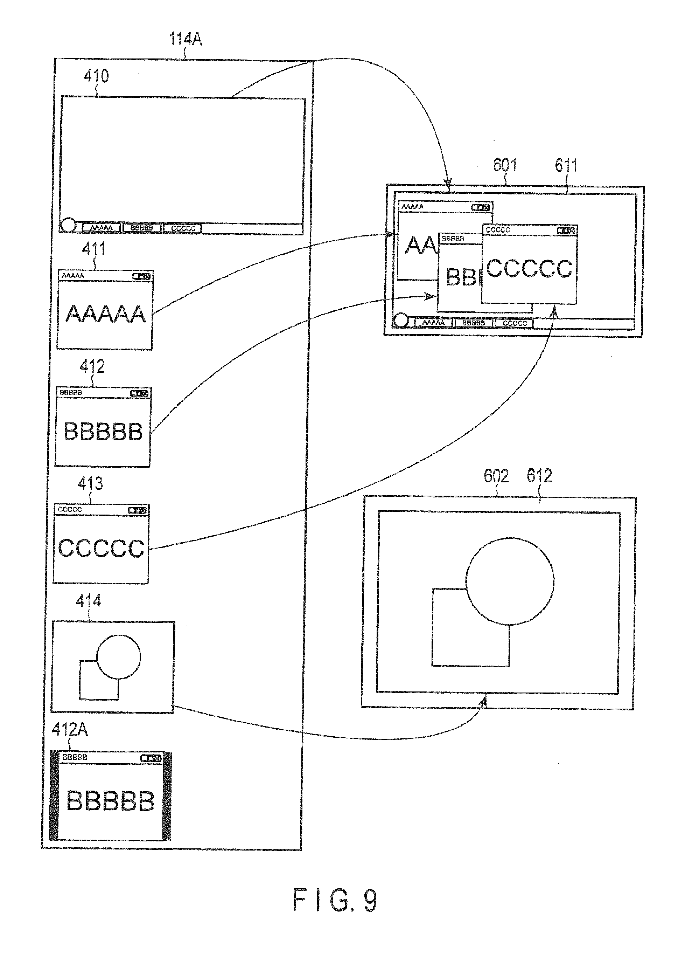

At this moment, the window display processing module 303 also generates within the VRAM 114A rendering data 412A that corresponds to rendering data 412 (the window 402), as illustrated in FIG. 9.

Rendering data 412A includes an image obtained by scaling rendering data 412 (the image in the window 402) to the resolution of the LCD 41 acquired by the resolution acquisition processing module 301. The window display processing module 303 generates as rendering data 412A such rendering data that allows the image in the window 402 to be displayed as a largest possible size on the LCD 41 while maintaining its aspect ratio. If empty spaces should occur because the LCD 41 and the window 402 do not agree with each other in aspect ratio, the window display processing module 303 will generate as rendering data 412A such rendering data that allows the empty spaces to be displayed in black, for instance.

When the user swipes on the touchpad 14 to move the cursor onto thumbnail region 702A and then clicks while icon 702E is displayed, the window display processing module 303 requests the external display 40 to display rendering data 412A.

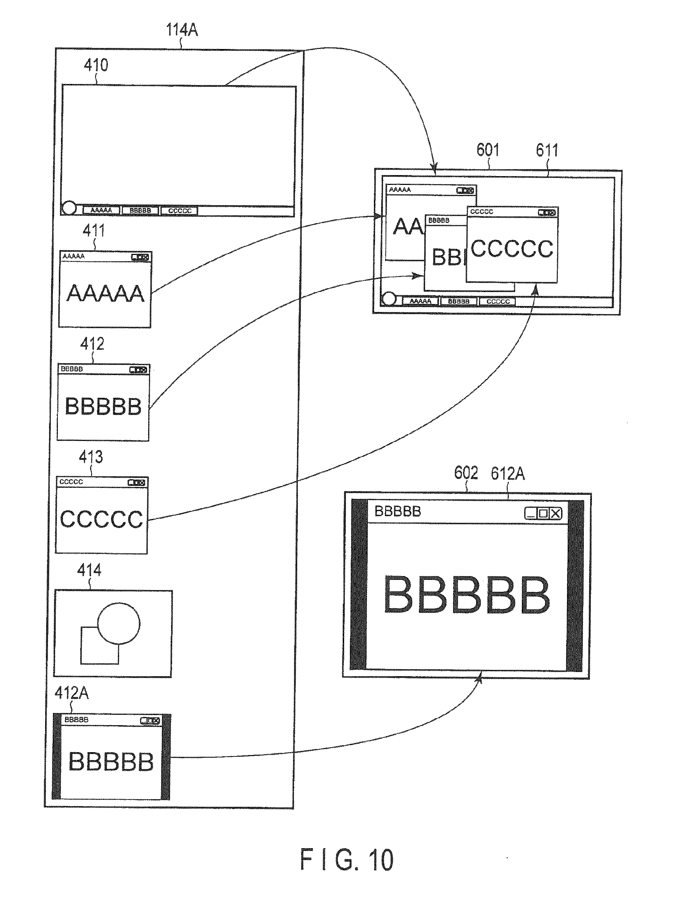

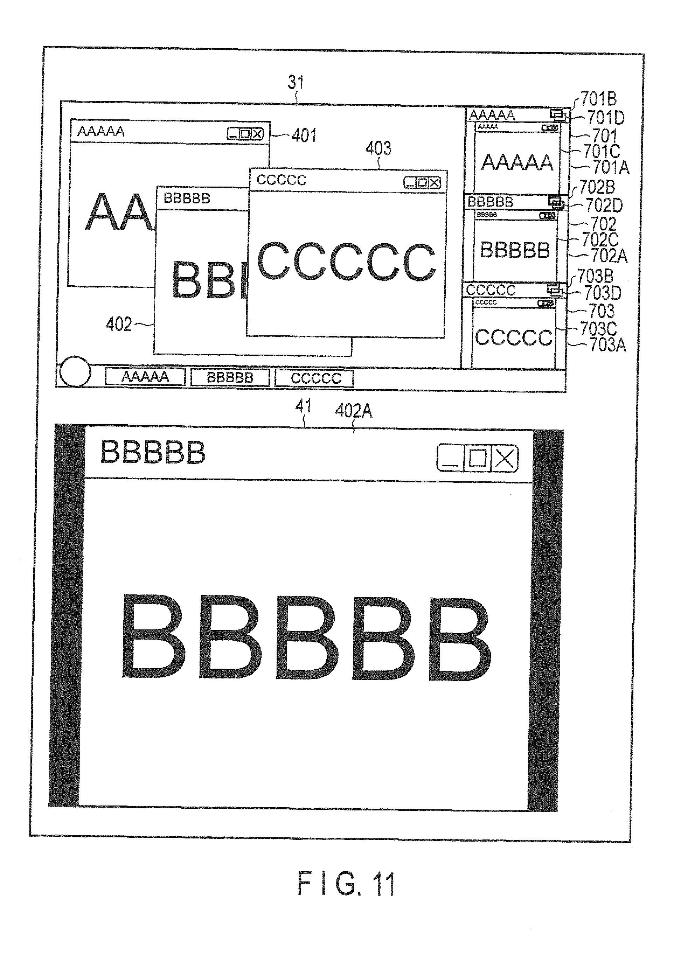

As illustrated in FIG. 10, the operating system 151 generates rendering data 612, based on rendering data 412A, within the frame buffer 602 secured for the external display 40. As a result, as illustrated in FIG. 11, an image 402A corresponding to the window 402 will be displayed on the LCD 41 of the external display 40.

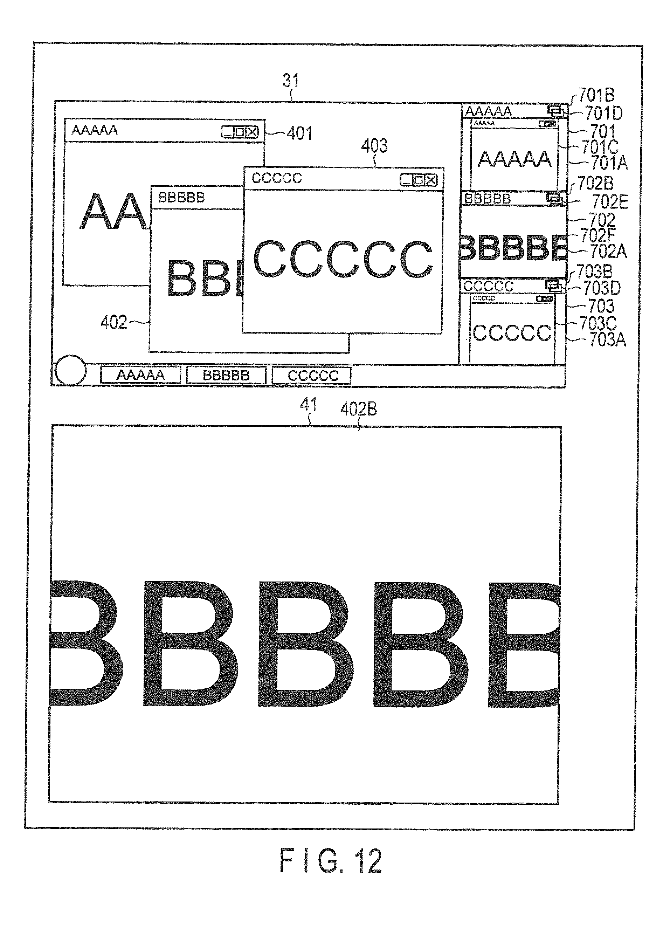

When an enlargement operation is performed by swiping upward on the right side edge of the touchpad 14 while pressing the SHIFT key under the condition that a pointer is displayed in thumbnail region 702A, the window display processing module 303 generates an item of rendering data, which the external display 40 should display, based on a second image that is regarded as rendering data 412A and is a part of an enlarged image obtained by enlarging the window 402. As a result, as illustrated in FIG. 12, an image 402B that is the part of the enlarged image obtained by enlarging the window 402 will be displayed on the LCD 41 of the external display 40. It should be noted that a thumbnail image 702F of the image 402B will be displayed in thumbnail region 702A.

When a reduction operation is performed by swiping downward a finger touching on the right side edge of the touchpad 14 while pressing the SHIFT key under the condition that a pointer is displayed in thumbnail region 702A and that what are displayed on the respective displays are those as illustrated in FIG. 12, the window display processing module 303 generates as rendering data 412A an item of rendering data that allows to be displayed a reduced image obtained by reducing the image 402B. As a result, the reduced image of the image 402B will be displayed on the LCD 41 of the external display 40.

It should be noted that, when the user swipes on the touchpad 14 to move the cursor onto icon 702D and then clicks, the user interface display processing module 302 changes icon 702D into icon 207E, as illustrated in FIG. 7. At this moment, the window display processing module 303 also generates within the VRAM 114A as rendering data 412A an item of rendering data that corresponds to rendering data 412 (the window 402) as illustrated in FIG. 9.

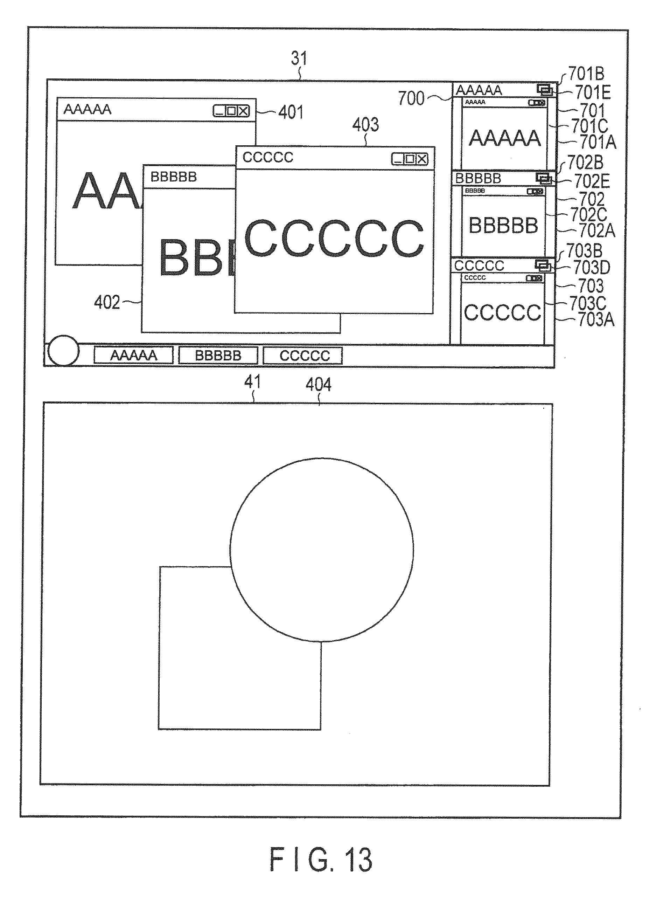

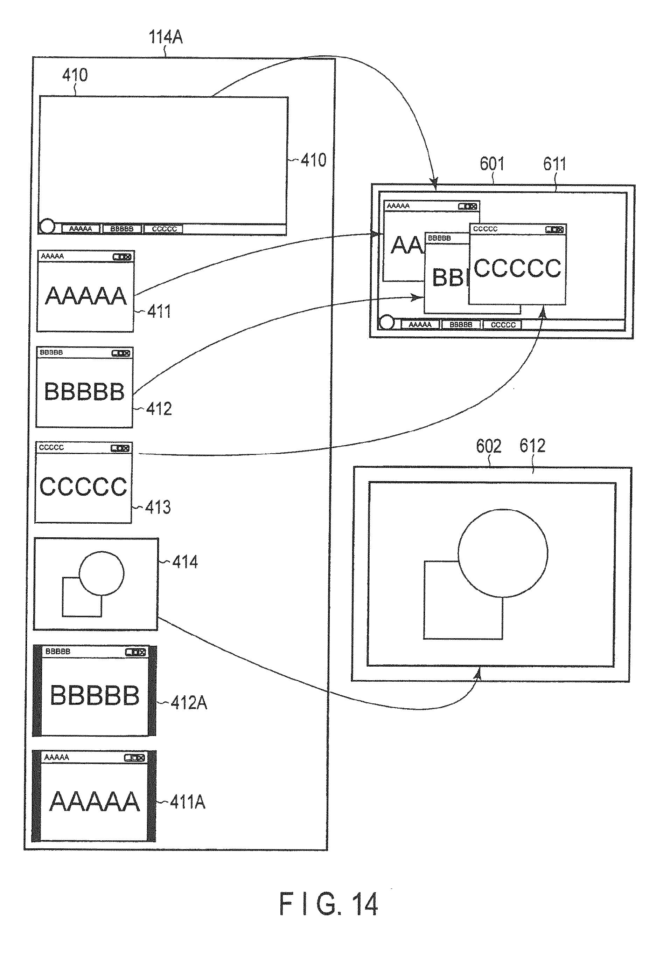

It should be further noted that, when the user swipes on the touchpad 14 to move the cursor onto icon 701D and then clicks under such a condition as illustrated in FIG. 8, the user interface display processing module 302 changes icon 701D into an icon 201E, as illustrated in FIG. 13. At this moment, the window display processing module 303 also generates within the VRAM 114A as rendering data 412A an item of rendering data that corresponds to rendering data 412 (the window 402), as illustrated in FIG. 14.

Rendering data 412A includes an image obtained by scaling rendering data 412 (the image in the window 402) to the resolution of the LCD 41 of the external display 40. The window display processing module 303 generates as rendering data 412A such rendering data that allows the image in the window 402 to be displayed as a largest possible size on the LCD 41 of the external display 40 while maintaining its aspect ratio. If empty spaces should occur because the LCD 41 of the external display 40 and the window 402 do not agree with each other in aspect ratio, the window display processing module 303 will generate as rendering data 412A such rendering data that allows the empty spaces to be displayed in black, for instance.

When the user swipes on the touchpad 14 to move the cursor onto thumbnail region 702A and then clicks under such a condition as illustrated in FIG. 13, the window display processing module 303 requests the external display 40 to display rendering data 412A.

The operating system 151 generates rendering data 612, based on rendering data 412A, within the frame buffer 602 secured for the external display 40. As a result, as illustrated in FIG. 14, an image 402A corresponding to the window 402 will be displayed on the LCD 41 of the external display 40.

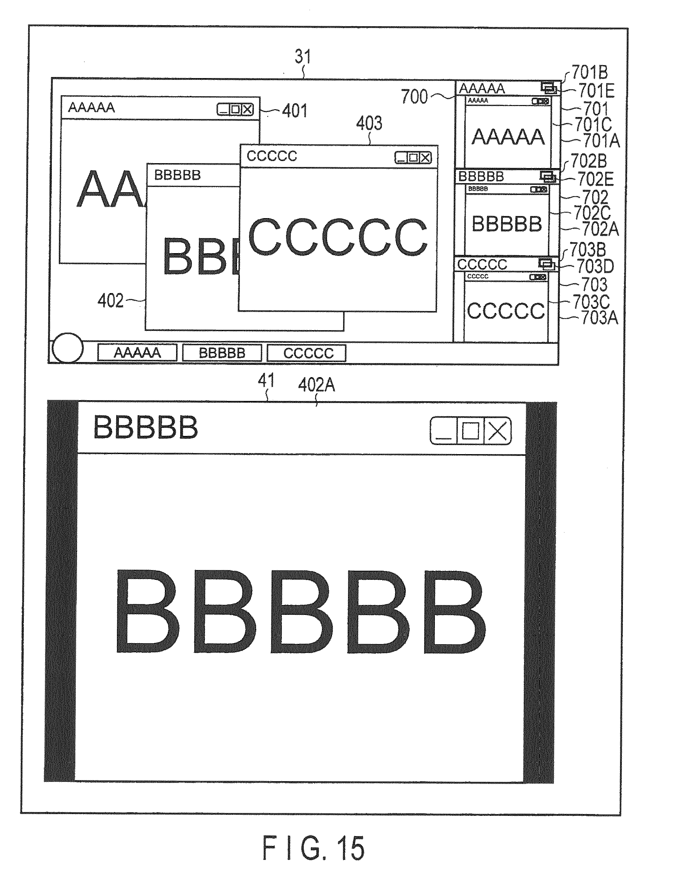

When the user swipes on the touchpad 14 to move the cursor onto thumbnail region 701A and then clicks under such a condition as illustrated in FIG. 13 or FIG. 15, the window display processing module 303 requests the external display 40 to display rendering data 412A.

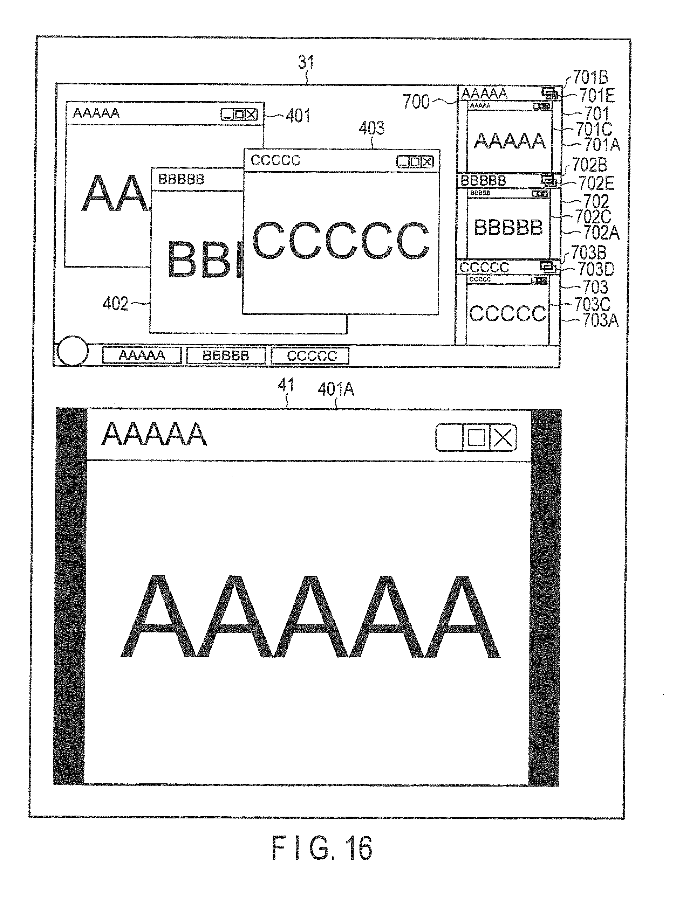

The operating system 151 generates, based on rendering data 411A, rendering data within the frame buffer 602 secured for the external display 40. As a result, an image 401A corresponding to the window 401 will be displayed on the LCD 41 of the external display 40, as illustrated in FIG. 16.

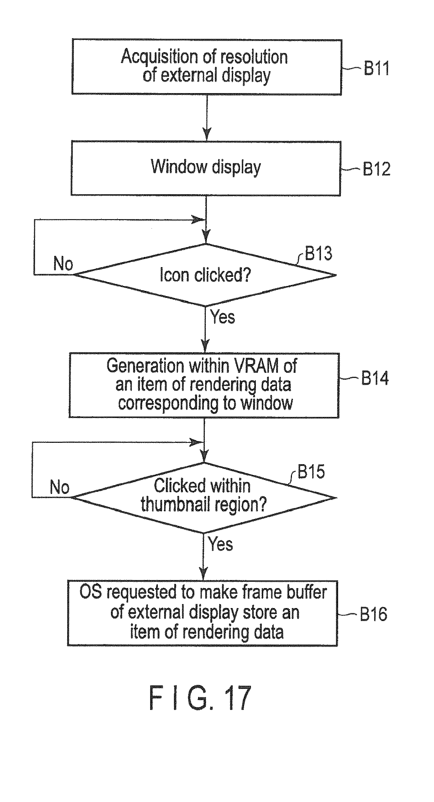

FIG. 17 is the flow chart exemplarily illustrating procedural steps executed by the user interface display processing module.

The resolution acquisition processing module 301 acquires from the operating system 151 the resolution of the external display 40, which is the secondary display (Block B11).

The user interface display processing module 302 executes the process of displaying the operating window 700 that has an operating palette 701, operating palette 702, and operating palette 703 respectively corresponding to the window 401, the window 402 and the window 403 individually displayed on both/either the LCD 31 and/or the LCD 41 of the external display 40 (Block B12).

The window display processing module 303 determines whether a click has occurred under the condition that the pointer is displayed as being located in thumbnail region 70XA (X=1, 2 or 3) based on the positional information indicating the position of the pointer and the click information indicating whether the button is clicked or not, both indicated by the operating system (Block B13).

When it is determined that a click has occurred while the pointer is displayed as being on icon 70XD (X=1, 2 or 3) (Yes in Block B13), the window display processing module 303 generates within the VRAM 114A an item of rendering data (rendering data 412A, for instance) corresponding to the window connected with the clicked icon 70XD (X=1, 2 or 3) (Block B14).

The window display processing module 303 determines whether a click has occurred under the condition that the pointer is displayed as being located in thumbnail region 70XA (X=1, 2 or 3) that corresponds to the clicked icon 70XD (X=1, 2 or 3) based on the positional information indicating the position of the pointer and the click information indicating whether the button is clicked or not, both indicated by the operating system (Block B15).

When it is determined that a click has occurred while the pointer is displayed as being in thumbnail region 70XA (X=1, 2 or 3) (Yes in Block B15), the window display processing module 303 requests the operating system 151 to store in the frame buffer 602 secured for the external display 40 an item of rendering data (rendering data 412, for instance) which is based on an rendering data that is within the VRAM 114A and corresponds to the clicked icon 70XD (X=1, 2 or 3).

The operating system 151 generates, based on rendering data 412A, rendering data within the frame buffer 602 secured for the external display 40. As a result, an image corresponding to the window will be displayed on the external display 40.

The present embodiment makes it possible to cause the external display 40 to display a first image obtained by scaling a first window selected from at least one window being displayed on both/either the LCD 31 and/or the LCD 41 of the external display 40. As a result, multiple images corresponding to multiple windows can be selectively displayed when making a presentation, for instance, resulting in the achievement of an effective use of the multiple displays.

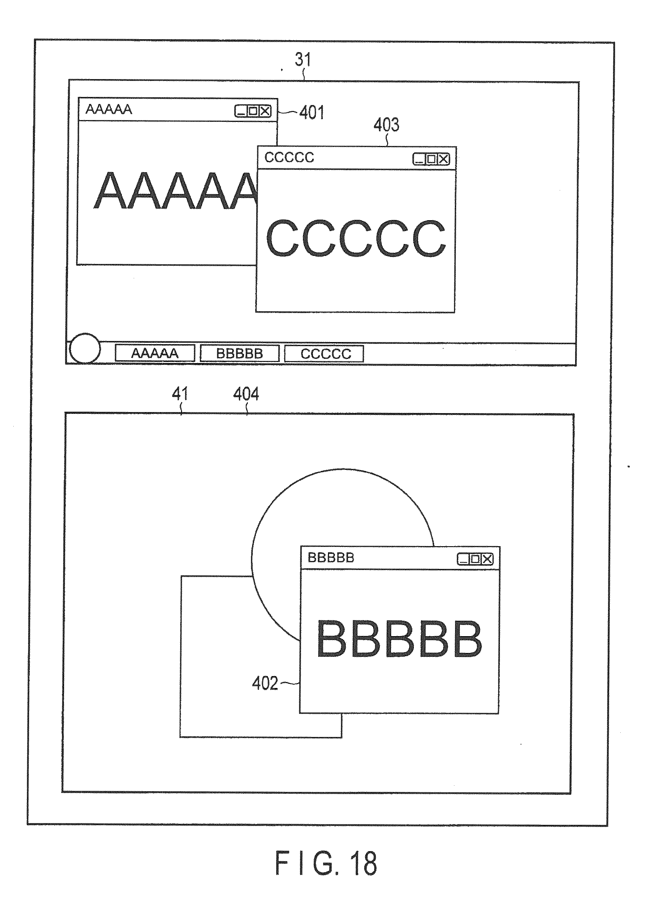

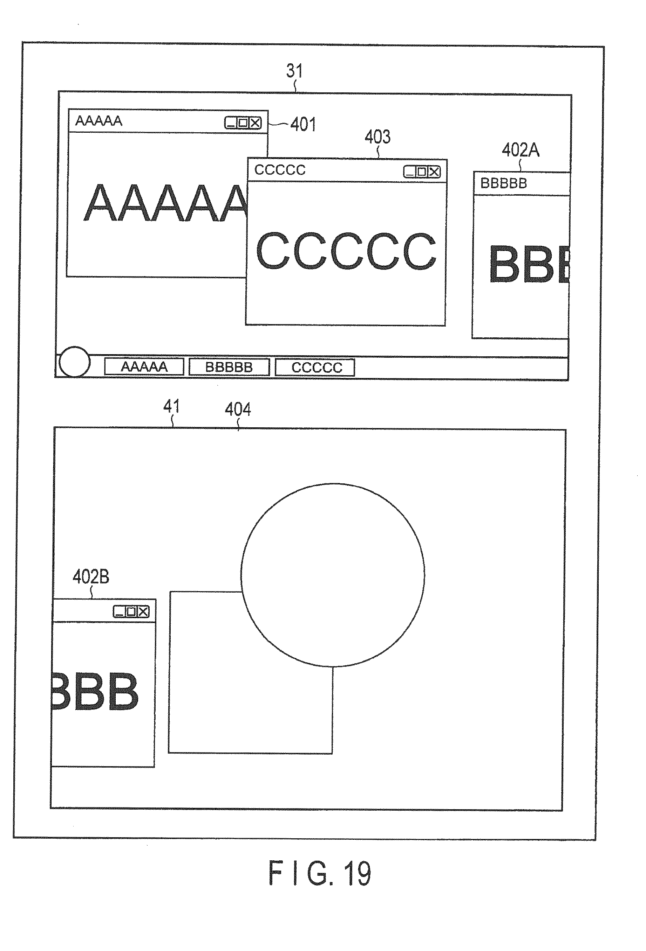

It should be noted that the second window 402 may be displayed on the LCD 41 of the external display 40, as illustrated in FIG. 18. Furthermore, it is possible as illustrated in FIG. 19 that the second window 402 may be displayed partly on the LCD 31 as 402A and residually on the LCD 41 of the external display 40 as 402B.

The first display is built in an item of electronic device, but it is possible that the first display may be an external display. The item of electronic device and the second display are connected with each other by way of the HDMI output port 23 or the RGB port 24, but it is possible that they are wirelessly connected with each other. Furthermore, it is possible that the second display is a projector.

It should be noted that the present embodiment can be reduced to a computer program, which makes it possible to easily accomplish the same effects as the present embodiment only to install the computer program in a computer through a computer readable storage medium storing the computer program and to cause the computer to execute the installed computer program.

## Claims

1. Electronic device **characterized by** comprising:
a display controller (303) to perform a process for displaying, on a second display, a first image obtained by scaling to a resolution of the second display a first window which is selected from at least one window being displayed on a first display and/or the second display.

2. The device of Claim 1, **characterized in that** the display controller scales the first window for obtaining the first image to be displayed on the second display as a largest possible size while maintaining an aspect ratio of the first window.

3. The device of Claim 1, **characterized in that** the display controller performs a process for displaying, on the second display, a second image obtained by partly enlarging the first window and o if an enlargement operation is performed by a user.

4. The device of Claim 1, **characterized in that** the display controller performs a process for displaying, on the second display, the first image in an extended desktop mode.

5. A display method **characterized by** comprising:
displaying, at least one window on at least one of a first display and a second display; and
performing a process for displaying, on the second display, a first image obtained by scaling to a resolution of the second display a first window which is selected from the at least one window.

6. A program executed by a computer, **characterized in that** the program causes the computer to:
display, at least one window on at least one of a first display and a second display; and
perform a process for displaying, on the second display, a first image obtained by scaling to a resolution of the second display a first window which is selected from the at least one window.
